# FASCICULE DE BREVET EUROPEEN

(11) **EP 3 109 063 B1**
(45) Date de publication et mention de la délivrance du brevet: **14.03.2018**
(21) Numéro de dépôt: 16175565.7
(22) Date de dépôt: 21.06.2016
(51) Int. Cl.: B60B 37/02, B60B 35/04, B60B 35/16, B60B 37/04, B61F 5/50, B61F 19/04, B60B 17/00

(54) **ESSIEU COMPORTANT AU MOINS DEUX DISPOSITIFS DE PROTECTION**
ACHSE, DIE MINDESTENS ZWEI SCHUTZVORRICHTUNGEN UMFASST
WHEEL AXLE COMPRISING AT LEAST TWO PROTECTION DEVICES

(30) Priorité: 23.06.2015 FR 1555742
(43) Date de publication de la demande: 28.12.2016
(73) Titulaire: ALSTOM Transport Technologies, 93400 Saint-Ouen (FR)
(72) Inventeur: ZANGHELLI, Patrick, 01090 Guéreins (FR)
(74) Mandataire: Lavoix

(56) Documents cités:
- EP-A1- 2 345 491
- WO-A1-00/59764
- DE-U1-202014 002 014

## Description

La présente invention concerne un essieu pour véhicule, ainsi qu'un véhicule équipé d'un tel essieu.

De nombreux véhicules comportent un ou plusieurs essieux montés sous un châssis rigide. Chaque essieu comprend en général deux roues montées chacune à une extrémité d'un arbre, et fréquemment un ou plusieurs disques de freinage et/ou un réducteur. En particulier, les bogies de véhicules ferroviaires, tels que des locomotives ou des wagons, comprennent de tels essieux.

Cependant, des essieux de ce type, de par leur placement sous le châssis du bogie, sont parfois endommagés par des chocs. En effet, afin de simplifier la structure des véhicules et de faciliter l'inspection et la maintenance des essieux et des systèmes de freinage associés, les essieux sont en général laissés découverts, c'est-à-dire qu'ils ne sont pas protégés par un coffret.

En particulier, dans le cas des véhicules ferroviaires, des pierres provenant du ballast de la voie sont susceptibles d'endommager l'essieu si elles sont projetées contre l'arbre lors du déplacement du train. De tels chocs risquent de causer l'apparition de défauts superficiels, pouvant mener à la fissuration, voire à la rupture de l'arbre. Lorsque de tels défauts sont détectés, il est donc fréquemment nécessaire de procéder au remplacement de l'essieu.

Il est connu du document EP 2 345 491 A1 un dispositif de protection d'un essieu de véhicule ferroviaire. Le dispositif comporte deux coquilles entourant l'arbre de l'essieu pour le protéger contre les chocs. Cependant, un tel dispositif de protection est spécifique à l'essieu sur lequel il est monté. En effet, la longueur du dispositif doit être adaptée à la longueur du segment de l'arbre que le dispositif doit protéger. Si un dispositif de ce type est monté sur un segment dont la longueur est supérieure à la longueur du segment pour lequel le dispositif a été conçu, une partie de l'arbre ne sera pas recouverte et restera donc susceptible d'être endommagée. Ainsi, pour des arbres de longueurs différentes, différents dispositifs de protection doivent être prévus.

De plus, un essieu comporte en général, en plus des roues, des disques de freinage. Ces éléments sont portés par un même arbre, et divisent l'arbre en plusieurs segments. Or, tous les segments de l'arbre ne présentent pas nécessairement la même longueur. Il est donc nécessaire de prévoir plusieurs types de dispositifs de protection de tailles différentes afin de protéger efficacement tous les segments des essieux d'une flotte de véhicules ferroviaires. La variété des dispositifs nécessaires est encore augmentée lorsque la flotte se compose de véhicules présentant différents types d'essieux.

Il existe donc un besoin pour un dispositif de protection d'un essieu contre les chocs qui soit adaptable aisément à différents types d'essieux.

A cet effet, l'invention a pour objet un essieu pour véhicule, l'essieu comprenant un arbre s'étendant selon un axe principal, un premier dispositif de protection et au moins un deuxième dispositif de protection, chaque dispositif comprenant un corps entourant au moins partiellement l'arbre dans un plan perpendiculaire à l'axe principal, le corps présentant une première portion d'extrémité et une deuxième portion d'extrémité, les portions d'extrémités étant opposées selon l'axe principal. La première portion d'extrémité du premier dispositif entoure au moins partiellement la deuxième portion d'extrémité du deuxième dispositif dans un plan perpendiculaire à l'axe principal.

Grâce à l'invention, les dispositifs de protection peuvent être adaptés pour protéger des segments d'arbres de longueurs variées en modifiant la longueur sur laquelle la première portion d'extrémité du premier dispositif entoure la deuxième portion d'extrémité du deuxième dispositif, alors que les longueurs des portions de l'arbre utilisées pour la fixation des dispositifs peuvent être réduites.

Selon d'autres aspects avantageux de l'invention, l'essieu comprend une ou plusieurs des caractéristiques suivantes, prises isolément ou suivant toutes les combinaisons techniquement possibles :
- le corps de chaque dispositif comprend deux demi-coquilles, chaque demi-coquille étant sensiblement semi-cylindrique.
- les demi-coquilles sont identiques entre elles.
- les demi-coquilles sont fixées l'une à l'autre par encliquetage.
- la première portion d'extrémité et la deuxième portion d'extrémité présentent chacune une forme cylindrique à base annulaire.
- la première portion d'extrémité présente une première longueur selon l'axe principal et la deuxième portion d'extrémité présente une deuxième longueur selon l'axe principal, la première longueur et la deuxième longueur étant chacune supérieure ou égale à 2 centimètres.
- la première portion d'extrémité présente un premier diamètre extérieur et un premier diamètre intérieur, la deuxième portion d'extrémité présente un deuxième diamètre extérieur et un deuxième diamètre intérieur, la différence entre le premier diamètre intérieur et le deuxième diamètre extérieur étant supérieure ou égale à 10 millimètres.
- le corps comprend une portion de serrage délimitée selon l'axe principal par la première portion d'extrémité et la deuxième portion d'extrémité, le dispositif comprenant, en outre, un collier serrant la portion de serrage contre l'arbre.
- la portion de serrage présente un troisième diamètre intérieur strictement inférieur au deuxième diamètre intérieur.

L'invention a également pour objet un véhicule comportant au moins un essieu tel que défini précédemment.

D'autres aspects et avantages de l'invention apparaîtront à la lecture de la description qui va suivre, donnée uniquement à titre d'exemple non limitatif, et faite en référence aux dessins annexés, sur lesquels :
- la figure 1 est une vue en coupe partielle d'un essieu comprenant une pluralité de dispositifs de protection, chaque dispositif comprenant un corps et un collier de serrage ; et
- la figure 2 est une vue en perspective éclatée du corps d'un dispositif de protection du type représenté sur la figure 1.

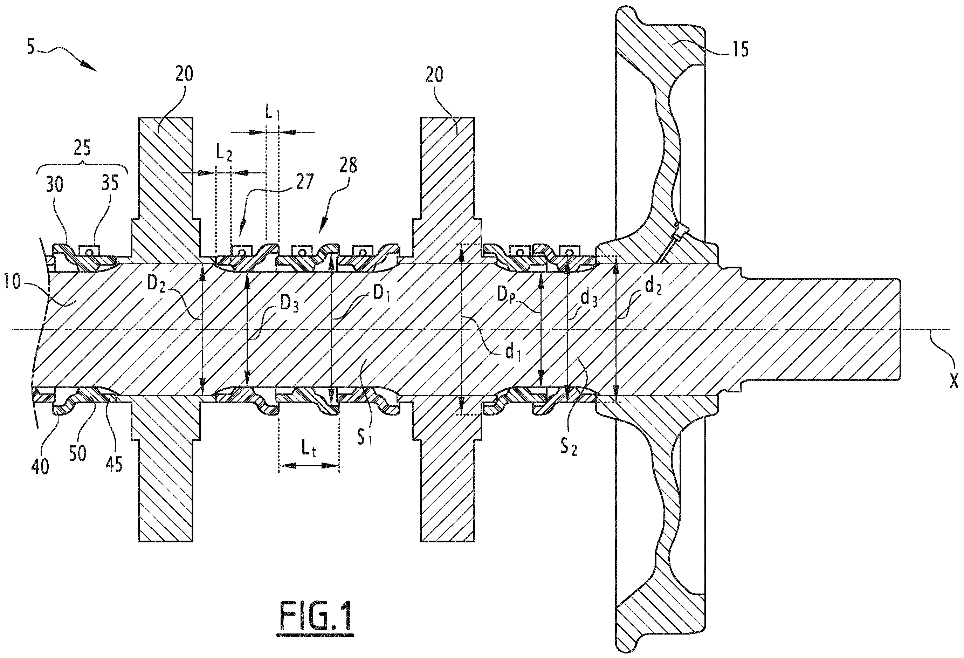

Un essieu 5 d'un véhicule ferroviaire est représenté sur la figure 1. L'essieu 5 comprend un arbre 10, deux roues 15 dont une seule est représentée sur la figure 1, au moins deux disques 20 de freinage et une pluralité de dispositifs 25 de protection.

L'arbre 10 s'étend selon un axe principal X. De préférence, l'arbre 10 est cylindrique à base circulaire autour de l'axe principal X.

L'arbre 10 est, par exemple, réalisé en acier.

Selon le mode de réalisation représenté sur la figure 1, l'arbre 10 comporte un premier segment S1 et un deuxième segment S2. Il est entendu que l'arbre 10 est divisé en plus de deux segments sur toute la longueur de celui-ci, seule une partie de l'arbre 10 étant représentée sur la figure 1.

Le premier segment S1 est délimité selon l'axe principal X par les deux disques 20, c'est-à-dire que le premier segment S1 s'étend entre les deux disques 20. Le premier segment S1 présente un diamètre principal Dp. Par exemple, le diamètre principal Dp est égal à 175 millimètres (mm).

Le deuxième segment S2 est délimité selon l'axe principal X par la roue 15 et par le disque 20 le plus proche de la roue 15, c'est-à-dire que le deuxième segment S2 s'étend entre la roue 15 et le disque 20 le plus proche. Le deuxième segment S2 présente un diamètre égal au diamètre principal Dp.

La pluralité de dispositifs 25 comprend un premier dispositif 27 et au moins un deuxième dispositif 28. Sur la figure 1, l'essieu 5 comprend sept dispositifs 25 pour la partie de l'arbre 10 représentée sur cette figure. L'essieu 5 comprend en fait autant de dispositifs 25 qu'il est nécessaire pour protéger l'ensemble de l'arbre 10, comme cela sera décrit ultérieurement.

Chaque dispositif 25 est identique aux autres dispositifs 25.

Chaque dispositif 25 comprend un corps 30 et un collier 35.

Le corps 30 entoure au moins partiellement l'arbre 10 dans un plan radial perpendiculaire à l'axe principal X. De préférence, le corps 30 entoure complètement l'arbre 10.

Le corps 30 comporte une première portion d'extrémité 40, une deuxième portion d'extrémité 45 et une portion de serrage 50 s'étendant entre les première 40 et deuxième 45 portions d'extrémité.

Le corps 30 est réalisé en un matériau plastique tel que le polyéthylène haute densité.

Le corps 30 présente une longueur totale Lt mesurée selon l'axe principal X entre les extrémités respectives de la première portion d'extrémité 40 et de la deuxième portion d'extrémité 45. La longueur totale Lt est, par exemple, égale à 95 mm.

La première portion d'extrémité 40 et la deuxième portion d'extrémité 45 sont opposées selon l'axe principal X. La portion de serrage 50 est délimitée selon l'axe principal X par la première portion d'extrémité 40 et la deuxième portion d'extrémité 45.

La portion de serrage 50 présente une face interne 62 en contact avec l'arbre 10. La face interne 62 présente une pluralité de rainures 65 et une pluralité de bourrelets 70.

La portion de serrage 50 est configurée pour que chaque bourrelet 70 soit en contact avec l'arbre 10 lorsque le dispositif 25 est serré sur l'arbre 10.

Selon l'exemple de la figure 1, la première portion d'extrémité 40 présente la forme d'une jupe s'étendant à partir de la portion de serrage 50, c'est-à-dire que le corps 30 s'évase de la portion de serrage 50 à la première portion d'extrémité 40.

La première portion d'extrémité 40 comporte une partie terminale 72. La partie terminale 72 est la partie de la première portion d'extrémité 40 qui est la plus éloignée, selon l'axe principal X, de la deuxième portion d'extrémité 45. La partie terminale 72 présente une forme cylindrique à base annulaire autour de l'axe principal X.

En variante, la première portion d'extrémité 40 est conique à base circulaire autour de l'axe principal X.

La première portion d'extrémité 40 présente un premier diamètre intérieur D1 et un premier diamètre extérieur d2. Le premier diamètre intérieur D1 et le deuxième diamètre intérieur D2 sont respectivement les diamètres extérieur et intérieur de la partie terminale 72.

Le premier diamètre intérieur D1 est strictement supérieur au diamètre principal Dp. Le premier diamètre intérieur D1 est égal, par exemple, à 230 mm.

Le premier diamètre extérieur d1 est, par exemple, égal à 255 mm.

La première portion d'extrémité 40 présente une première longueur L1 selon l'axe principal X.

La première longueur L1 est supérieure ou égale à un cinquième de la longueur totale Lt. La première longueur L1 est, par exemple, supérieure ou égale à deux centimètres (cm).

La deuxième portion d'extrémité 45 est cylindrique à base annulaire autour de l'axe principal X.

La deuxième portion d'extrémité 45 présente un deuxième diamètre intérieur D2 et un deuxième diamètre extérieur d2.

Le deuxième diamètre intérieur D2 est supérieur ou égal au diamètre principal Dp, de préférence strictement supérieur. Par exemple, le deuxième diamètre intérieur D2 est égal à 200 mm.

Le deuxième diamètre extérieur d2 est strictement inférieur au premier diamètre intérieur D1. De préférence, la différence entre le deuxième diamètre extérieur d2 et le premier diamètre intérieur D1 est supérieure ou égale à 10 mm.

La deuxième portion d'extrémité 45 présente une deuxième longueur L2 selon l'axe principal X.

La deuxième longueur L2 est supérieure ou égale à un cinquième de la longueur totale Lt. La deuxième longueur L2 est, par exemple, supérieure ou égale à 2 cm. De préférence, la deuxième longueur L2 est égale à la première longueur L1, à 10 pourcents (%) près.

La portion de serrage 50 présente un troisième diamètre intérieur D3. Le troisième diamètre intérieur D3 est mesuré entre les points les plus proches de deux bourrelets 70 opposés selon une direction perpendiculaire à l'axe principal X.

Le troisième diamètre intérieur D3 est supérieur ou égal au diamètre principal Dp, de préférence égal au diamètre principal Dp.

Le troisième diamètre intérieur D3 est strictement inférieur au deuxième diamètre intérieur D2. Cela signifie que, lorsque la portion de serrage 50 est serrée contre l'arbre 10, la deuxième portion d'extrémité 45 n'est pas en contact avec l'arbre 10.

Par exemple, le troisième diamètre intérieur D3 est égal au diamètre intérieur Dp.

De préférence, la portion de serrage 50 et son diamètre intérieur D3 sont configurés pour que, lorsque le corps 30 entoure l'arbre 10 mais que la portion de serrage 50 n'est pas serrée par le collier 35 sur l'arbre 10, le corps 30 soit mobile en translation selon l'axe principal X autour de l'arbre 10.

La portion de serrage 50 présente un troisième diamètre externe d3. Le troisième diamètre externe d3 est, par exemple, égal au deuxième diamètre externe d2. Le corps 30 présente donc, à l'extérieur, la forme d'un tronc cylindrique comprenant à une extrémité une jupe s'évasant à partir du tronc.

Chaque rainure 65 s'étend parallèlement à l'axe principal X. Chaque rainure 65 est donc propre à être traversée par un flux d'un fluide F orienté parallèlement à l'axe principal X. Par exemple, la rainure 65 est cylindrique à base circulaire autour d'un axe secondaire A.

L'axe secondaire A est parallèle à l'axe principal X.

Chaque rainure 65 est délimitée selon une direction tangentielle à l'arbre 10 par deux bourrelets 70. Il est entendu par le terme « direction tangentielle» une direction perpendiculaire à un segment de droite reliant l'axe principal X de l'arbre 10 et l'axe secondaire A de la rainure 65.

Chaque bourrelet 70 est cylindrique à base circulaire autour d'un axe parallèle à l'axe principal X.

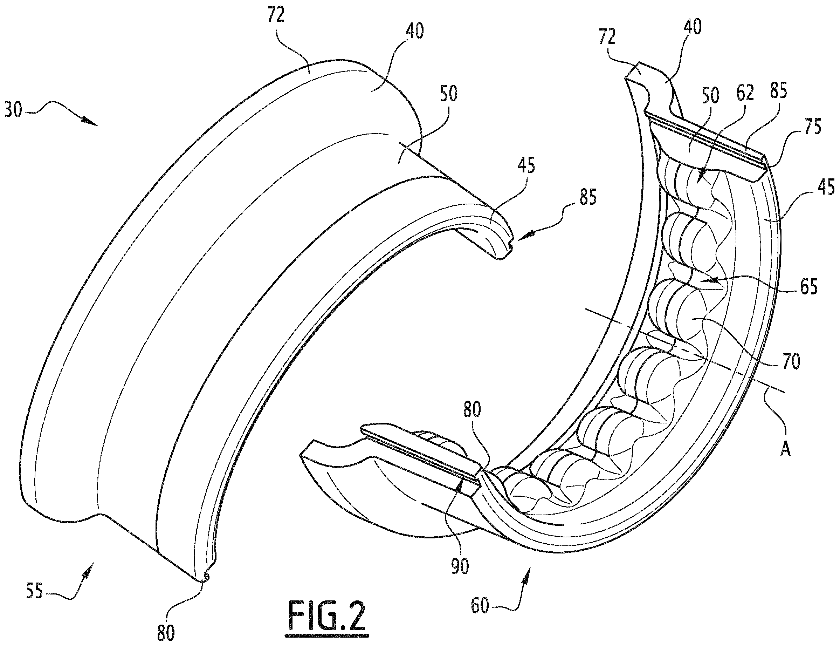

Le corps 30 comprend une première demi-coquille 55 et une deuxième demi-coquille 60, visibles sur la figure 2. Le corps 30 est formé par la réunion des deux demi-coquilles 55, 60, permettant une mise en place aisée du corps 30 autour de l'arbre 10.

Chaque demi-coquille 55, 60 est sensiblement semi-cylindrique. Cela signifie que, chaque demi-coquille est propre à entourer l'arbre 10 sur un angle égal à 180 degrés (°), à 15 ° près.

De préférence, les deux demi-coquilles 55, 60 sont identiques entre elles.

Les deux demi-coquilles 55, 60 sont fixées l'une à l'autre dans un plan d'assemblage axial, c'est-à-dire dans un plan contenant l'axe principal X.

Chaque demi-coquille 55, 60 comporte un premier bord 75 et un deuxième bord 80. Chaque bord 75, 80 s'étend parallèlement à l'axe principal X depuis la première portion d'extrémité 40 jusqu'à la deuxième portion d'extrémité 45.

Le premier bord 75 et le deuxième bord 80 sont configurés pour que, lorsque la première demi-coquille 55 et la deuxième demi-coquille 60 sont fixées l'une à l'autre, le premier bord 75 de chaque demi-coquille 55, 60 est en contact avec le deuxième bord 80 de l'autre demi-coquille 55, 60.

Le premier bord 75 comprend des premiers moyens de fixation 85.

Le deuxième bord 80 comprend des deuxièmes moyens de fixation 90.

Les premiers moyens de fixation 85 de chaque demi-coquille 55, 60 sont propres à collaborer avec les deuxièmes moyens de fixation 90 de l'autre demi-coquille 55, 60 pour fixer la première demi-coquille 55 à la deuxième demi-coquille 60. De préférence, les premiers moyens de fixation 85 sont propres à collaborer avec les deuxièmes moyens de fixation 90 par encliquetage.

Selon l'exemple de la figure 2, les premiers moyens de fixation 85 prennent la forme d'une languette 85 et les deuxièmes moyens de fixation 90 prennent la forme d'une gorge 90 dans laquelle la languette 85 est insérée.

L'assemblage de l'essieu 5 par un opérateur va maintenant être décrit.

La première demi-coquille 55 et la deuxième demi-coquille 60 du premier dispositif 27 sont fixées l'une à l'autre autour du premier segment S1 par encliquetage pour former le corps 30 du premier dispositif 27.

Le corps 30 du premier dispositif 27 est alors dans une première position dans laquelle le premier dispositif 27 est en butée contre un disque 20.

La première demi-coquille 55 et la deuxième demi-coquille 60 du deuxième dispositif 28 sont, ensuite, fixées l'une à l'autre autour de l'arbre 10 par encliquetage pour former le corps 30 du deuxième dispositif 28.

Le corps 30 du deuxième dispositif 28 est déplacé en translation par l'opérateur jusqu'à une deuxième position dans laquelle la première portion d'extrémité 40 du premier dispositif 27 entoure au moins une partie de la deuxième portion d'extrémité 45 du deuxième dispositif 28. En particulier, la partie terminale 72 du premier dispositif 27 entoure au moins une partie de la deuxième portion d'extrémité 45 du deuxième dispositif 28.

Il est défini pour le premier dispositif 27 et le deuxième dispositif 28 une longueur Lr de recouvrement. La longueur de recouvrement Lr est la longueur, mesurée selon l'axe principal X, sur laquelle la deuxième portion d'extrémité 45 du deuxième dispositif 28 est entourée par la première portion d'extrémité 40 du premier dispositif 27.

La deuxième position est choisie par l'opérateur en fonction de la longueur de recouvrement Lr désirée par l'opérateur.

Comme le deuxième diamètre extérieur d2 est strictement inférieur au premier diamètre intérieur D1, il existe donc une ouverture annulaire entre la première portion d'extrémité 40 du premier dispositif 27 et la deuxième portion d'extrémité 45 du deuxième dispositif 28.

Ces étapes sont répétées pour chaque dispositif 25 équipant l'arbre 10. En particulier, l'essieu 5 est équipé par l'opérateur d'autant de dispositifs 25 que nécessaire pour protéger sur toute leur longueur chacun des segments S1, S2 de l'arbre 10.

Chaque corps 30 est ensuite serré sur l'arbre 10 par son collier 35 respectif. Le collier 35 entoure la portion de serrage 50 dans un plan perpendiculaire à l'axe principal X.

Lors de la mise en place, par un opérateur, des dispositifs 25 autour de l'axe 10, la longueur de recouvrement Lr est choisie par l'opérateur. Un même nombre de dispositifs 25 peut donc être utilisé pour protéger contre les chocs des arbres 10 de longueurs différentes. Le dispositif 25 est donc plus adaptable que les dispositifs de protection 25 de l'état de la technique. En outre, comme la portion de serrage 50 occupe une portion réduite de l'arbre 10, il est facilement envisageable d'ajouter des dispositifs de protection 25 sur l'arbre 10 si celui-ci présente une longueur particulièrement importante. En outre, il est possible d'adapter le nombre de dispositifs de protection 25 à la longueur du segment S1, S2 sur lequel les dispositifs 25 sont fixés, c'est-à-dire que pour un segment très court un seul dispositif 25 peut être prévu pour recouvrir ce segment.

L'invention permet donc, avec une pièce de base unique, de couvrir un maximum de surface de l'arbre 10. Par exemple :
- un unique dispositif de protection 25 protège un segment de longueur égale à 95 mm,
- deux dispositifs de protection 25 protègent un segment de longueur comprise entre 170 et 190 mm,
- trois dispositifs de protection 25 protègent un segment de longueur comprise entre 245 et 285 mm,
- quatre dispositifs de protection 25 protègent un segment de longueur comprise entre 320 et 380 mm,
- cinq dispositifs de protection 25 protègent un segment de longueur comprise entre 395 et 475 mm, et
- six dispositifs de protection 25 protègent un segment de longueur comprise entre 470 et 570 mm.

De plus, si l'essieu 25 est mouillé, l'eau circule aisément à travers les rainures 65 et est évacuée à travers l'ouverture subsistant entre la première portion d'extrémité 40 du premier dispositif 27 et la deuxième portion d'extrémité 45 du deuxième dispositif 28. Le dispositif 25 permet donc de limiter les risques de corrosion de l'arbre 10.

En outre, comme les deux demi-coquilles 55, 60 sont fixées l'une à l'autre par encliquetage, les positions respectives de chaque dispositif 25 sont faciles à ajuster. Le dispositif 25 est donc aisé à mettre en place.

## Revendications

1. Essieu (5) pour véhicule, l'essieu (5) comprenant un arbre (10) s'étendant selon un axe principal (X), un premier dispositif (25) de protection et au moins un deuxième dispositif de protection (25), chaque dispositif (25) comprenant un corps (30) entourant au moins partiellement l'arbre (10) dans un plan perpendiculaire à l'axe principal (X), le corps (30) présentant une première portion d'extrémité (40) et une deuxième portion d'extrémité (45), les portions d'extrémités (40, 45) étant opposées selon l'axe principal (X),
**caractérisé en ce que** la première portion d'extrémité (40) du premier dispositif (25) entoure au moins partiellement la deuxième portion d'extrémité (45) du deuxième dispositif (25) dans un plan perpendiculaire à l'axe principal (X).

2. Essieu (5) selon la revendication 1, dans lequel le corps (30) de chaque dispositif (25) comprend deux demi-coquilles (55, 60), chaque demi-coquille (55, 60) étant sensiblement semi-cylindrique.

3. Essieu (5) selon la revendication 2, dans lequel les demi-coquilles (55, 60) sont identiques entre elles.

4. Essieu (5) selon la revendication 2 ou 3, dans lequel les demi-coquilles (55, 60) sont fixées l'une à l'autre par encliquetage.

5. Essieu (5) selon l'une quelconque des revendications 1 à 4, dans lequel la première portion d'extrémité (40) et la deuxième portion d'extrémité (45) présentent chacune une forme cylindrique à base annulaire.

6. Essieu (5) selon l'une quelconque des revendications 1 à 5, dans lequel la première portion d'extrémité (40) présente une première longueur (L1) selon l'axe principal (X) et la deuxième portion d'extrémité présente une deuxième longueur (L2) selon l'axe principal (X), la première longueur (L1) et la deuxième longueur (L2) étant chacune supérieure ou égale à 2 centimètres.

7. Essieu (5) selon l'une quelconque des revendications 1 à 6, dans lequel la première portion d'extrémité (40) présente un premier diamètre extérieur (d1) et un premier diamètre intérieur (D1), la deuxième portion d'extrémité présente un deuxième diamètre extérieur (d2) et un deuxième diamètre intérieur (D2), la différence entre le premier diamètre intérieur (D1) et le deuxième diamètre extérieur (d2) étant supérieure ou égale à 10 millimètres.

8. Essieu (5) selon l'une quelconque des revendications 1 à 7, dans lequel le corps (30) comprend une portion de serrage (50) délimitée selon l'axe principal (X) par la première portion d'extrémité (40) et la deuxième portion d'extrémité (45), le dispositif (25) comprenant, en outre, un collier (35) serrant la portion de serrage (50) contre l'arbre (10).

9. Essieu (5) selon la revendication 8, dans lequel la portion de serrage (50) présente un troisième diamètre intérieur (D3) strictement inférieur au deuxième diamètre intérieur (D2).

10. Véhicule ferroviaire comprenant au moins un essieu (5) selon l'une quelconque des revendications 1 à 9.

## Patentansprüche

1. Radachse (5) für ein Fahrzeug, wobei die Radachse (5) aufweist eine Welle (10), die sich entlang einer Hauptachse (X) erstreckt, eine erste Schutz-Vorrichtung (25) und wenigstens eine zweite Schutz-Vorrichtung (25), wobei jede Vorrichtung (25) einen Körper (30) aufweist, der die Welle (10) wenigstens teilweise umgibt in einer Ebene senkrecht zu der Hauptachse (X), wobei der Körper (30) einen ersten Endabschnitt (40) und einen zweiten Endabschnitt (45) hat, wobei die Endabschnitte (40, 45) entlang der Hauptachse (X) entgegensetzt sind,
**dadurch gekennzeichnet, dass** der erste Endabschnitt (40) der ersten Vorrichtung (25) den zweiten Endabschnitt (45) der zweiten Vorrichtung (25) wenigstens teilweise umgibt in einer Ebene senkrecht zu der Hauptachse (X).

2. Radachse (5) gemäß Anspruch 1, wobei der Körper (30) jeder Vorrichtung (25) zwei Halb-Schalen (55, 60) aufweist, wobei jede Halb-Schale (55, 60) im Wesentlichen halb-zylindrisch ist.

3. Radachse (5) gemäß Anspruch 2, wobei die Halb-Schalen (55, 60) zueinander identisch sind.

4. Radachse (5) gemäß dem Anspruch 2 oder 3, wobei die Halb-Schalen (55, 60) via Rastung aneinander befestigt sind.

5. Radachse (5) gemäß irgendeinem der Ansprüche 1 bis 4, wobei der erste Endabschnitt (40) und der zweite Endabschnitt (45) jeweils eine kreiszylindrische Form haben.

6. Radachse (5) gemäß irgendeinem der Ansprüche 1 bis 5, wobei der erste Endabschnitt (40) eine erste Länge (L1) entlang der Hauptachse (X) hat und der zweite Endabschnitt eine zweite Länge (L2) entlang der Hauptachse (X) hat, wobei die erste Länge (L1) und die zweite Länge (L2) jeweils größer oder gleich 2 Zentimeter sind.

7. Radachse (5) gemäß irgendeinem der Ansprüche 1 bis 6, wobei der erste Endabschnitt (40) einen ersten Außendurchmesser (d1) und einen ersten Innendurchmesser (D1) hat, der zweite Endabschnitt einen zweiten Außendurchmesser (d2) und einen zweiten Innendurchmesser (D2) hat und die Differenz zwischen dem ersten Innendurchmesser (D1) und dem zweiten Außendurchmesser (d2) größer oder gleich 10 Millimeter ist.

8. Radachse (5) gemäß irgendeinem der Ansprüche 1 bis 7, wobei der Körper (30) einen Klemmabschnitt (50) aufweist, der entlang der Hauptachse (X) begrenzt ist von dem ersten Endabschnitt (40) und dem zweiten Endabschnitt (45), wobei die Vorrichtung (25) ferner einen Ring (35) aufweist, der den Klemmabschnitt (50) gegen die Welle (10) klemmt.

9. Radachse (5) gemäß dem Anspruch 8, wobei der Klemmabschnitt (50) einen dritten Innendurchmesser (D3) hat, der strikt kleiner als er zweite Innendurchmesser (D2) ist.

10. Schienenfahrzeug mit wenigstens einer Radachse (5) gemäß irgendeinem der Ansprüche 1 bis 9.

## Claims

1. A wheel axle (5) for a vehicle, the wheel axle (5) comprising a shaft (10) extending along a main axis (X), a first protection device (25) and at least one second protection device (25), each device (25) comprising a body (30) at least partially surrounding the shaft (10) in a plane perpendicular to the main axis (X), the body (30) having a first end portion (40) and a second end portion (45), the end portions (40, 45) being opposite one another along the main axis (X),
**characterized in that** the first end portion (40) of the first device (25) at least partially surrounds the second end portion (45) of the second device (25) in a plane perpendicular to the main axis (X).

2. The wheel axle (5) according to claim 1, wherein the body (30) of each device (25) comprises two half-shells (55, 60), each half-shell (55, 60) being substantially semicylindrical.

3. The wheel axle (5) according to claim 2, wherein the two half-shells (55, 60) are identical to one another.

4. The wheel axle (5) according to claim 2 or 3, wherein the two half-shells (55, 60) are fastened to one another by snapping.

5. The wheel axle (5) according to any one of claims 1 to 4, wherein the first end portion (40) and the second end portion (45) each have a cylindrical shape with an annular base.

6. The wheel axle (5) according to any one of claims 1 to 5, wherein the first end portion (40) has a first length (L1) along the main axis (X) and the second end portion has a second length (L2) along the main axis (X), the first length (L1) and the second length (L2) each being greater than or equal to 2 centimeters.

7. The wheel axle (5) according to any one of claims 1 to 6, wherein the first end portion (40) has a first outer diameter (d1) and a first inner diameter (D1), the second end portion has a second outer diameter (d2) and a second inner diameter (D2), the difference between the first inner diameter (D1) and the second outer diameter (d2) being greater than or equal to 10 millimeters.

8. The wheel axle (5) according to any one of claims 1 to 7, wherein the body (30) comprises a gripping portion (50) defined along the main axis (X) by the first end portion (40) and the second end portion (45), the device (25) further comprising a collar (35) gripping the gripping portion (50) against the shaft (10).

9. The wheel axle (5) according to claim 8, wherein the gripping portion (50) has a third inner diameter (D3) strictly smaller than the second inner diameter (D2).

10. A rail vehicle comprising at least one wheel axle (5) according to any one of claims 1 to 9.
